# EUROPEAN PATENT APPLICATION

(11) **EP 2 437 374 A2**
(43) Date of publication of application: **04.04.2012**
(21) Application number: 11183583.1
(22) Date of filing: 30.09.2011
(51) Int. Cl.: H02J 9/02

(54) **DC lighting system**

(30) Priority: 01.10.2010 GB 1016536
(71) Applicant: Birchcroft Plc., Romford, Essex RM3 8UJ (GB)
(72) Inventor: Bishop, John, Romford, Essex RM3 8UJ (GB)
(74) Representative: Thompson, Andrew John

(57) **Abstract**

A DC lighting system for a building. The system comprises a DC distribution network, arranged to supply DC power to at least a portion of the building. The system also includes a plurality of DC lights, each light being coupled to the DC distribution network at spaced intervals. The system also includes a DC power source having a DC power output, the DC power source being coupled to the DC distribution network to provide DC power to the plurality of lights. The DC power source is a rechargeable battery. The system also includes a charger, coupled to the DC power source, the charger arranged to charge the DC power source. The system also includes a mains power source, coupled to the charger to provide power to the charger for charging the DC power source. The system also includes a first switching mechanism coupled to the DC distribution network, to switch at least one of said light between an on setting and an off setting.

## Description

### Background to the Invention

Residential, commercial and industrial buildings of various types are typically required, by relevant local regulations, to include emergency lighting systems. For example, a large residential block of flats may be required to have emergency lighting in all communal areas, so that in the event of a fire, or other emergency, residents can easily exit the building.

Such emergency lighting systems typically include a mixture of light fittings. For example, they may be either simple 230 Volt lamps, or visually similar light fittings which incorporate a back-up battery system, within the unit itself. The number of 'emergency' units required is dependent upon the particular building arrangement, and the current regulation light level requirements.

The emergency units, under normal conditions, run off 230 Volts. They incorporate a low voltage battery, a battery charger and a power inverter, which combine to provide a reduced emergency light level, from the low voltage battery, for a limited period in emergency situations, such as when the mains power supply fails.

One problem with emergency light units of this type is that the unit cost is relatively high. Each unit includes a bulb, a battery source, a mains power input and a detector switch. All of these components have a cost which is clearly greater than providing a simple bulb.

Furthermore, this type of emergency light requires a very time consuming maintenance and inspection regime. The battery and switch of each individual unit has to be regularly checked to ensure proper operation. This is particularly important in view of regulations that exist in most countries requiring a safe visible exit to be provided from the building at all times.

It is an aim of the present invention to provide an improved lighting system for buildings.

### Summary of the Invention

In a first aspect, the present invention provides a DC lighting system for a building, the system comprising: a DC low voltage distribution network, arranged to supply DC power to at least a portion of the building; a plurality of DC low voltage lights, each light being coupled to the DC distribution network; a DC power source having a DC power output, the DC power source being coupled to the DC distribution network to provide DC power to the plurality of lights, wherein the DC power source is a rechargeable battery; a charger, coupled to the DC power source, the charger arranged to charge the DC power source; at least one additional power source, coupled to the charger to provide power to the charger for charging the DC power source; and a first switching mechanism coupled to the DC distribution network, to switch at least one of said light between an on setting and an off setting; wherein power is supplied to the DC lighting system in a single mode in which the DC power source supplies power to the DC lighting system, and the at least one additional power source supplies power to the charger, for charging the DC power source.

In a second aspect, the present invention provides a building having a DC lighting system and a plurality of predefined areas, each area having: a DC low voltage distribution network, arranged to supply DC low voltage power to the predefined area of the building; a plurality of DC low voltage lights, each light being coupled to the DC distribution network at spaced intervals; a DC power source having a DC power output, the DC power source being coupled to the DC distribution network to provide DC power to the plurality of lights, wherein the DC power source is a rechargeable battery; and a charger, coupled to the DC power source, the charger arranged to charge the DC power source; wherein the building includes at least one consumer unit, each charger being coupled to the at least one consumer unit; at least one additional power source, coupled to the consumer unit to provide power to each of the chargers for charging the DC power sources; and a first switching mechanism coupled to the lighting system, to switch at least one of said lights between an on setting and an off setting; and power is supplied to the DC lighting system in a single mode in which the DC power source supplies power to the DC lighting system, and the at least one additional power source supplies power to the charger, for charging the DC power source.

Further features of the invention are listed in the appended claims.

Further features and advantages of the lighting system will be clear from the following detailed description.

### Brief Description of the Drawings

Examples of the invention will now be described with reference to the accompanying drawings in which:
Figure 1 shows a DC lighting system in accordance with an embodiment of the invention; and
Figure 2 shows a building including a DC lighting system in accordance with an embodiment of the invention.

### Description of Embodiments

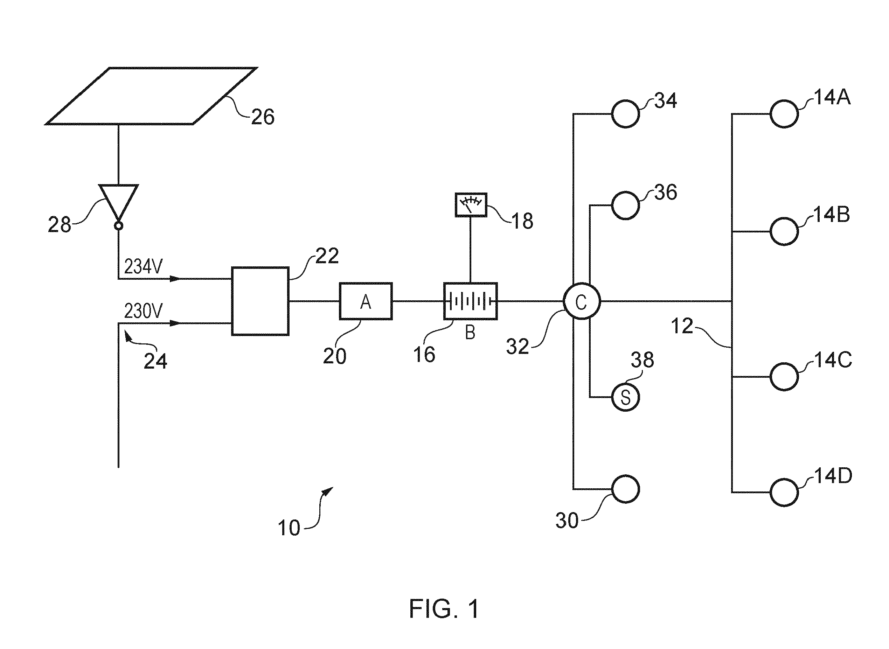

Figure 1 shows an example of a lighting system 10 in accordance with an embodiment of the invention. The lighting system 10 is a direct current (DC) system in which all of the lights and switching gear (described in more detail below) operate on a DC low voltage distribution network 12. The DC distribution network 12 includes one or more DC transmission lines (details not shown in Figure 1) which carry DC power around the DC distribution network 12. One or more low voltage (LV) DC lamp units 14a, 14b, 14c, 14d are connected directly to the DC transmission lines which form part of the DC distribution network 12. The LV lamp units 14 may be, for example, LED lamp units designed to run at 12, 24 or 36 volts. Suitable LV lamps may be bought commercially.

DC power is provided to the DC distribution network 12 by the deep cycle battery unit 16. A deep cycle battery is appropriate for use in this application because of the possibility of the battery being significantly discharged of most of its capacity at certain times. The battery may be a 12, 24 or 36 volt battery, the precise voltage being chosen in accordance with compatibility with the rest of the system. The lighting system 10 includes a battery meter 18 which will enable maintenance staff to monitor the capacity and performance of deep cycle battery 16. The lighting system 10 includes a smart three-stage battery charger 20. The smart charger 20 monitors the deep cycle battery 16 to ensure the battery 16 is charged as appropriate.

The charger 20 may run directly off low voltage DC produced from a sustainable source, e.g. solar panel. This reduces losses in the system. Alternatively, (and as shown in the Figures) the charger 20 may run off mains rated voltage AC power. This is produced by inverter 28 (described in more detail below). Preferably, there is also a mains AC power supply (e.g. the national grid 230 Volt mains AC power) so that the charger 20 may constantly charge the deep cycle battery if required.

The lighting system 10 also includes a consumer control unit (CCU) (also known as a consumer unit or simply fuse box) 22. The CCU 22 can draw 230 Volt AC mains power from a mains transmission line 24, which draws power from the national grid, or from the alternative source of low voltage power. As noted above, the low voltage power source may by converted to mains voltage AC using inverter 28. CCU 22 forwards the 230 Volt AC power to the smart charger 20.

The lighting system 10 is also adapted to operate with power generated locally. For example, in this embodiment, the system 10 shows a solar PV panel 26. The solar PV panel 26 generates DC current which is converted by inverter unit 28 to 234 volt AC which is supplied to the CCU 22. The CCU 22 is arranged to draw power from the source of the higher potential difference. Therefore, while the solar PV panel 26 is generating electricity, the smart charger 20 is supplied with power directly from the solar PV panel 26. When the solar PV panel 26 electricity generation drops below 230 volts, the smart charger draws electricity from the national grid.

It will be appreciated that other types of locally generated power may be used in conjunction with the system 10.

The lighting system 10 also includes various control devices which may switch the LV lamp unit 14 on or off. Firstly, the lighting system 10 includes a photo cell override 30. The photo cell override 30 is connected to switching panel 32 which is positioned on the distribution network 12 between the battery 16 and the lamps 14. The photo cell override 30 may be arranged such that when levels of natural light drop below a certain level (for example in the evening) the lamps 14 are switched on.

The control devices may also include a timer 34. The timer is also connected to the switching panel 32. The timer is arranged to switch the lights on during certain times. For example, the timer 34 may be used to ensure that the lights are always on during certain hours of known darkness. The system 10 also includes a fire alarm override 36. The fire alarm override is arranged to switch the lamps 14 on whenever the fire alarm goes off.

In addition to the above, there may also be an override switch linked to the "Fireman's" key switch. This turns the lighting on when the switch is operated by the emergency services.

Finally, the lighting system 10 includes a smoke detector 38. The smoke detector 38 is also connected to the switching panel 32. The smoke detector is arranged to switch the lamps 14 on whenever smoke is detected.

The operation, application and advantages of the lighting system 10 will now be described. The lighting system 10 may be installed in the communal areas of a residential block of flats. The lamp units may be provided on the ceiling of communal corridors and stairwells. The transmission lines of the distribution network 12 may be formed as tracks running along the ceiling of the communal areas. During the day when there are no emergency conditions, the lamp units 14 remain off. At night time (detected either by the timer 34 or the photo cell 30) the lamps 14 are switched on and draw DC power from the battery 16. During emergency conditions, whether at day or night, when the fire alarm or smoke detector goes off, the lamps 14 are also switched on. Therefore, the lighting system 10 provides a single lighting system which provides both communal and emergency lighting. The LV lamp units 14 replace the communal mains powered lamps and the emergency light boxes. This represents a substantial reduction in the number of units installed in communal areas. This reduces installation time and cost, and is more aesthetically pleasing to residents.

If the mains power is lost, the lamps 14 continue to operate, drawing power from battery 16. Furthermore, if electricity is currently being generated locally by solar PV panel 26, or other locally generated electricity, the system can continue to operate in the absence of mains power. Furthermore, because the lighting system includes a single battery and charger, maintenance time and cost is reduced compared with a system in which every single light box must be checked. The system is also environmentally friendly. During normal communal use, the solar PV panel may charge the battery during the day allowing the lamps to draw the solar generated power from the battery 16 during the night.

A further benefit to this system is that it provides a guaranteed source of light in an emergency for a much longer period than the minimum of three hours required by typical the building regulations.

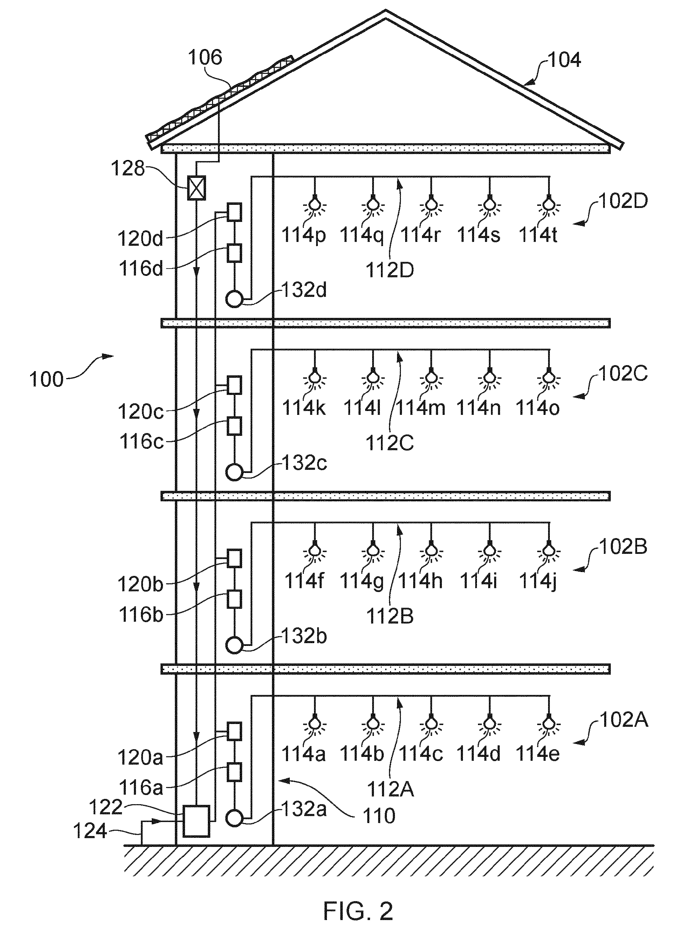

Figure 2 shows a building 100 having four floors, 102a, 102b, 102c and 102d. The building 100 also includes a roof 104. In Figure 2 the lighting system is represented by a lighting system 110. The lighting system 110 is the same as the lighting system 10 except that it includes four distribution networks, 112a 112b, 112c and 112d; one for each floor. Each distribution network 112 includes a series of lamps 114a to 114t. Furthermore, each floor includes its own smart charger 120a, 120b, 120c and 120d. Each floor also includes its own battery 116a, 116b, 116c and 116d. Finally, each floor includes its own switching panel 132a, 132b, 132c and 132d and control devices (not shown). The building includes a single CCU 122 and a photo voltaic array 106, which includes a number of cell PV panels 26. The array 106 is connected to the CCU 122 by inverter unit 128. Mains power is fed to the CCU 122 by line 124.

On of the key advantages of this system is that it provides superior levels of emergency lighting. The system uses the low voltage LEDs, which are suitably bright to serve as communal lighting and emergency lighting. Therefore the level of light provided under an emergency situation, is the same as that provided under normal communal situations. This is in contrast to prior art emergency lights which provide a reduced level of lighting. As the system runs off the battery 100% of the time, there is no need to use special 'emergency' fittings. All the light fittings will contain low energy, low voltage lamps such as LED's or mini fluorescents.

It will be appreciated that, while the claims provide for particular combination of features, other combinations are possible as will be appreciated by the person skilled in the art. The invention is not intended to be limited by the particular combination recited in the claims.

## Claims

1. A DC lighting system for a building, the system comprising:
a DC low voltage distribution network, arranged to supply DC power to at least a portion of the building;
a plurality of DC low voltage lights, each light being coupled to the DC distribution network;
a DC power source having a DC power output, the DC power source being coupled to the DC distribution network to provide DC power to the plurality of lights, wherein the DC power source is a rechargeable battery;
a charger, coupled to the DC power source, the charger arranged to charge the DC power source;
at least one additional power source, coupled to the charger to provide power to the charger for charging the DC power source; and
a first switching mechanism coupled to the DC distribution network, to switch at least one of said light between an on setting and an off setting; wherein
power is supplied to the DC lighting system in a single mode in which the DC power source supplies power to the DC lighting system, and the at least one additional power source supplies power to the charger, for charging the DC power source.

2. A DC lighting system according to claim 1, wherein the power required by the DC low voltage distribution network is supplied exclusively by the DC power source.

3. A DC lighting system according to claims 1 or 2, wherein the at least one additional power source does not supply power directly to the DC low voltage distribution network.

4. A DC lighting system according to any preceding claim, further comprising an emergency override, coupled to the first switching mechanism, and arranged to switch the lights on in the event of an emergency event.

5. A DC lighting system according to Claim 4, wherein the emergency override includes a fire alarm override, and the emergency event is activation of a fire alarm.

6. A DC lighting system according to Claim 4, wherein the emergency override includes a smoke detector override, and the emergency event is activation of a smoke detector.

7. A DC lighting system according to any preceding claim, further comprising a timer, coupled to the first switching mechanism, and arranged to switch the lights on and off at defined times.

8. A DC lighting system according to any preceding claim, further comprising a photocell override, coupled to the first switching mechanism, and arranged to switch the lights on when ambient light levels drop below a first defined level and to switch the lights off when ambient light levels rise above a second defined level.

9. A DC lighting system according to any preceding claim, wherein the at least one additional power source includes an AC mains power source.

10. A DC lighting system according to any preceding claim, wherein the at least one additional power source includes a renewable energy power source.

11. A DC lighting system according to any preceding claim wherein the at least one additional power source includes a mains power source and a renewable power source, and the system further comprises a customer unit, wherein the additional power sources are coupled to the charger via the customer unit.

12. A DC lighting system according to Claim 10, wherein the renewable power source is photovoltaic array.

13. A DC lighting system according to Claim 12, further comprising an inverter, coupled between the photovoltaic array and the consumer unit, wherein the inverter converts DC output from the array to AC.

14. A DC lighting system according to Claim 13, wherein the mains power source is at a lower voltage potential than the voltage potential of the AC output from the inverter.

15. A building having a DC lighting system and a plurality of predefined areas, each area having:
a DC low voltage distribution network, arranged to supply DC low voltage power to the predefined area of the building;
a plurality of DC low voltage lights, each light being coupled to the DC distribution network at spaced intervals;
a DC power source having a DC power output, the DC power source being coupled to the DC distribution network to provide DC power to the plurality of lights, wherein the DC power source is a rechargeable battery; and
a charger, coupled to the DC power source, the charger arranged to charge the DC power source;
wherein the building includes at least one consumer unit, each charger being coupled to the at least one consumer unit; at least one additional power source, coupled to the consumer unit to provide power to each of the chargers for charging the DC power sources; and a first switching mechanism coupled to the lighting system, to switch at least one of said lights between an on setting and an off setting; and
power is supplied to the DC lighting system in a single mode in which the DC power source supplies power to the DC lighting system, and the at least one additional power source supplies power to the charger, for charging the DC power source.
